# DEMANDE DE BREVET EUROPEEN

(11) **EP 0 586 360 A1**
(43) Date de publication de la demande: **09.03.1994**
(21) Numéro de dépôt: 93870184.4
(22) Date de dépôt: 02.09.1993
(51) Int. Cl.: B29C 63/16, B27D 1/08, B32B 31/00

(54) **Recouvrement de bois de placage ou de tissu en automobiles**

(30) Priorité: 02.09.1992 BE 9200778
(71) Demandeur: S.A. JONATHAN CAR STYLING INTERNATIONAL, B-4453 Juprelle (BE)
(72) Inventeur: Bandura, François, B-4453 Juprelle (BE)
(74) Mandataire: Vanderperre, Robert

(57) **Abrégé**

Le procédé de recouvrement consiste à étendre de la colle sur le placage (2) et à mouiller la face non encollée, à placer la pièce ABS (1) à recouvrir sur un support (3) épousant sa forme intérieure, à déposer le placage (2) sur ladite pièce (1), à déposer sur ledit placage (2) une feuille plastique (4), à placer la pièce (1-4) ainsi préparée sur le plateau interne (6) d'une presse, dont le couvercle chauffant (7) est pourvu d'une membrane élastique (5) résistant à la chaleur, et à l'aide d'une pompe à vide à appliquer le placage (2) sur la pièce (1) par déformation de la membrane (5).

## Description

La présente invention concerne la fabrication de boiseries haut de gamme pour intérieur de voitures et est relative à un recouvrement de bois de placage ou de tissu sur support ABS d'origine en première monte automobile.

Les procédés classiques utilisés pour les placages en automobiles consistent dans le placage sur suppcrt en aluminium, sur support en bois, en sandwich bois sur bois ou encore en sandwich bois et aluminium.

Ces procédés connus imposent une connaissance exacte de la forme extérieure et la réalisation de moules et empreintes chauffantes liées à chaque pièce à réaliser. Chaque évolution ou variation du support destiné à recevoir la pièce plaquée finie impose une retouche ou la confection d'un nouveau moule.

Pour remédier à ces inconvénients il a paru avantageux suivant l'invention de créer un procédé de recouvrement caractérisé en ce qu'il consiste à appliquer le placage à coller sur son support définitif par la déformation d'une membrane soumise à une dépression du côté intérieur au collage.

Suivant l'invention la membrane est éventuellement soumise à une pression du côté extérieur.

Le procédé suivant l'invention se réalise sous une atmosphère contrôlée en température.

L'invention est décrite maintenant plus en détail sur la base des dessins annexés, à titre d'exemple uniquement, montrant en :

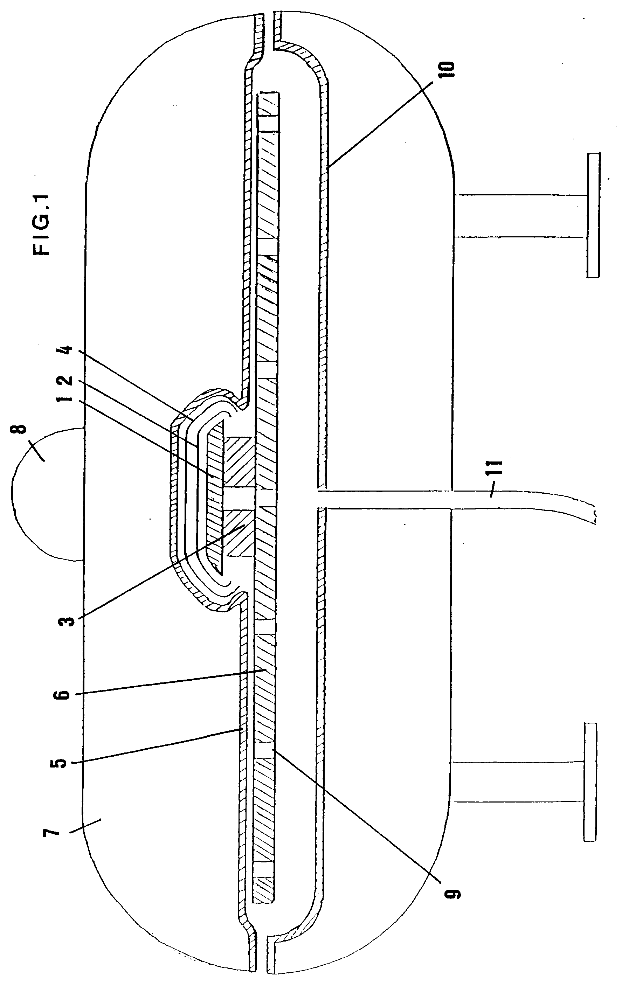

Figure 1 une coupe dans une presse, dans laquelle se réalise le procédé suivant l'invention, et
Figure 2 un détail à plus grande échelle de la coupe de figure 1.

Dans le procédé suivant l'invention la pièce 1 est dégriffée dans un premier temps et reçoit généralement un primaire, pour permettre un accrochage parfait de la colle sur la base ABS.

Les colles utilisées dépendent de la nature de la pièce à réaliser, les plus fréquentes étant les colles époxy deux composants, les colles polyuréthanes ou les colles UV.

La colle est ensuite étendue sur le placage 2 (bois ou tissu), à l'aide d'un pistolet pour la colle polyuréthane et à l'aide d'une spatule ou pinceau rouleau pour l'époxy.

Le placage 2 est mouillé sur la face non encollée, afin de permettre, au moment du positionnement sur la pièce ABS 1, un bon enveloppement.

La pièce 1 est placée sur un support 3 épousant sa forme intérieure pour éviter toute déformation du plastique. Le bord inférieur de ladite pièce 1 doit être surélevé de quelques centimètres sur son support 3 par rapport au plan de travail pour permettre un bon encollage des bords.

Le placage 2 est appliqué sur la base ABS 1 et sur ce placage 2 est déposée une feuille plastique 4 empêchant le surplus de colle d'adhérer à la membrane 5 de la presse.

A l'aide d'un tape le placage 2 et le plastique 4 sont fixés au support de collage. Le placage bois 2 est cranté pour éliminer le surplus de bois ou pour soulager les tension du bois lors du pressage.

La pièce préparée 1-4 est placée sur un plateau 6 à l'intérieur de la presse sous son couvercle 7, pourvu d'un élément chauffant 8 et muni de la membrane élastique 5 résistant à la chaleur. La plateau 6 présente des trous 9 permettant la dépression.

A travers la membrane fixe 10 du fond de la presse débouche un tuyau de dépression 11. A l'aide d'une pompe à vide le placage à coller 2 est appliqué sur la pièce 1 par déformation de la membrane 5, soumise à une dépression du côté extérieur si le placage l'impose.

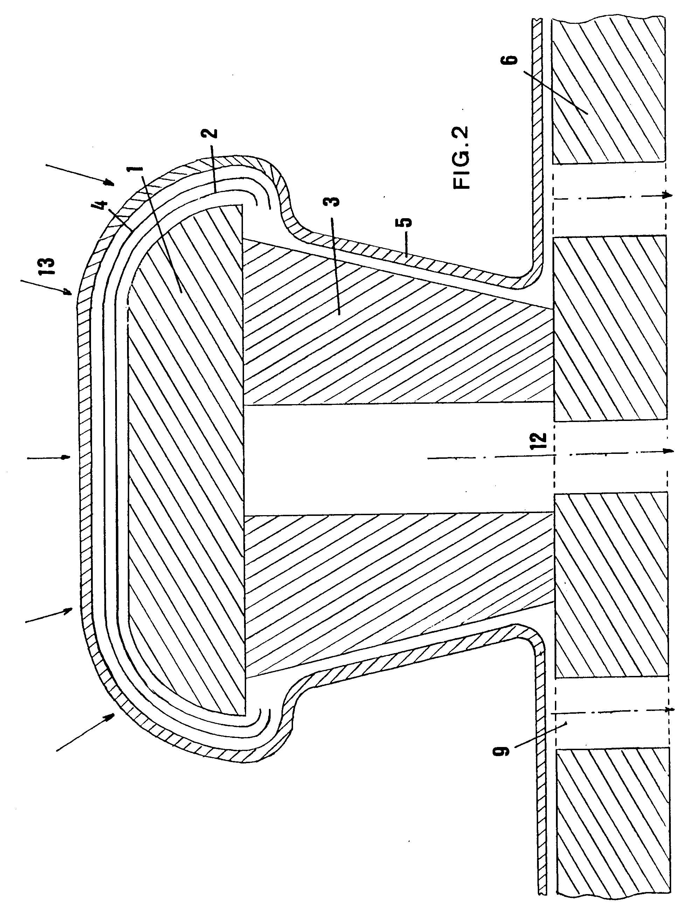

En figure 2 on voit en 12 le sens de la dépression et en 13 le sens de la pression.

La température est régulée et maintenue constante pendant toute la durée du collage par une sonde se trouvant dans le couvercle chauffant 7.

Le bon fonctionnement du processus de collage peut être vérifié en relevant le couvercle 7 tout en maintenant la dépression. Après avoir vérifié la bonne application du placage aux points critiques, c'est-à-dire aux angles, le couvercle 7 est abaissé jusqu'à la fin de l'opération.

Les avantages du procédé suivant l'invention sont nombreux :
- il n'y a pas de moule à réaliser en fonction de la forme extérieure de la pièce à plaquer, mais seulement un support pour maintenir cette dernière ;
- le temps de placage est lié aux seules caractéristiques de la colle utilisée ;
- la pression se répartit uniformément, indépendemment de la forme ;
- la pression est facilement ajustable ;
- la transmission de la chaleur est plus douce, par rapport aux procédés avec presses chauffantes, qui provoquent un choc thermique ;
- le placage s'ajuste aux variations de forme et de dimensions du support ;
- le support de la pièce à plaquer est plus aisément réalisable qu'un moule ayant la forme de la pièce;
- le prix de revient est de l'ordre de 50 % inférieur à la technique traditionnelle.

## Revendications

1. Procédé de recouvrement de bois de placage ou de tissu sur support ABS d'origine en première monte automobile, caractérisé en ce qu'il consiste à appliquer le placage à coller (2) sur son support définitif (1) par la déformation d'une membrane (5) soumise à une dépression du côté intérieur au collage.

2. Procédé de recouvrement suivant la revendication 1, caractérisé en ce qu'il consiste à étendre de la colle sur le placage (2) et à mouiller la face non encollée, à placer la pièce ABS (1) à recouvrir sur un support (3) épousant sa forme intérieure, à déposer le placage (2) sur ladite pièce (1), à déposer sur ledit placage (2) une feuille plastique (4), à placer la pièce (1-4) ainsi préparée sur le plateau interne (6) d'une presse, dont le couvercle chauffant (7) est pourvu d'une membrane élastique (5) résistant à la chaleur, et à l'aide d'une pompe à vide à appliquer le placage (2) sur la pièce (1) par déformation de la membrane (5).

3. Procédé de recouvrement suivant les revendications 1 et 2, caractérisé en ce que la membrane (5) est soumise aussi à une pression du côté extérieur.

4. Procédé de recouvrement suivant la revendication 2, caractérisé en ce qu'il se réalise sous une atmosphère contrôlée en température.

5. Procédé de recouvrement suivant la revendication 4, caractérisé en ce que la température est régulée et maintenue constante pendant toute la durée de l'opération par une sonde se trouvant dans le couvercle chauffant (7,8) de la presse.
